# EUROPEAN PATENT SPECIFICATION

(11) **EP 2 383 499 B1**
(45) Date of publication and mention of the grant of the patent: **07.11.2012**
(21) Application number: 11163707.0
(22) Date of filing: 26.04.2011
(51) Int. Cl.: F16L 23/06, F16L 29/00, F16L 37/62, F16L 55/10, B63B 21/00

(54) **Safety device for pipes fitting**
Sicherheitsvorrichtung zur Rohrverbindung
Dispositif de sécurité pour raccord de tuyaux

(30) Priority: 28.04.2010 IT BO20100263
(43) Date of publication of application: 02.11.2011
(73) Proprietor: Gradito Oleodinamica S.R.L, 93012 Gela (IT)
(72) Inventor: Pizzardi, Claudio, 93012, Gela (CL) (IT); Marrale, Carmelo, 93012, Gela (CL) (IT)
(74) Representative: Manzella, Giovanni

(56) References cited:
- WO-A1-2007/017559
- GB-A- 2 054 783

## Description

### Technical Field

The present invention regards a safety device for pipes fitting, in particular pipes subject to sudden displacements.

### Background Art

It has been known that for fitting pipes designed to the transport of oil products, which operate in danger conditions, as for example in the connections between boat and loading wharf or between boat and well platform, are usually adopted safety devices suitable to perform the fast release of the pipes. Such safety devices provide substantially a couple of valvular members arranged in sequence and an immediate release device, applied to the link flanges between the valvular members. In use, the cited safety devices in normal conditions are in the "open valves - closed release" state and start, actuating in sequence the closing of the valves and the opening of the release device, at the moment in which a danger situation occurs, determined by a sudden movement of a pipe with respect to the other one, as for example in the case of a boat in loading or unloading step which moves away from the ground because of a sea storm or of the breaking of a mooring. In order to avoid the pouring of the product in the surrounding environment it is vital that the sequence of total closure of the valves and successively the opening of the release which must occur in an instantaneous way be respected.

As an example, patent GB 2 162 270 discloses a coupling device with emergency release to couple two pipes, comprising a first valve suitable to be connected to a first pipe, a second valve suitable to be connected to a second pipe and a coupler member for reciprocal coupling of the valves. The device provides for a jack actuator that in a first time closes the valves and at the end of its stroke enables the opening of the coupler member. By effect of the kinematics of the actuator, opening the coupler member is not possible if the valves are not completely closed.

European patent application EP 1 762 769 presents a safety device for performing in sequence the closing of the valves and the opening of the uncoupling device in a pipe fitting operating in dangerous conditions. The fitting is formed by two couplable and uncouplable parts, suitable to be connected to respective pipes and provided with respective opening and closing valves, and by an openable uncoupling device that acts on end flanges of both parts of the fitting. The safety device comprises a hydrodynamic control cylinder provided with a rod suitable to perform a closing stroke of the valves and an opening stroke of the uncoupling device.

The cited solutions do not allow to re-open the valves after the start of the disconnection procedure, which means that the release device will be necessarily open because it is controlled by the same jack which controls the opening and the closing of the valves, and because the stroke of such a jack cannot be interrupted until it is completed. This limitation turns out to be disadvantageous in view of performing tests on the system for connecting the pipes.

International patent application WO 2007/017559 discloses an emergency release system, in particular for an arm for loading a fluid, comprising two valves coupled through a controlled opening collar, a single rod actuator and monoaxial kinematic means such that a displacement of the rod on a first part of the stroke closes both valves, and a displacement on the remainder of the stroke opens the collar. The actuator comprises means suitable to ensure the displacement of the rod on both parts of the stroke and controlled independently on each one of such parts, such means being controlled in an independent way on each part of the stroke and suitable to act coaxially. This solution enables to perform the handling of the valves without activating the emergency procedure.

The known solutions do not fully satisfy the exigencies of the users, particularly with respect to the rapidity and the safe of the emergency procedure, that is of the precautionary closing of both valves and in sequence the opening of the release device.

In particular, it is complained the fact that in some load or unload conditions, incidental openings of the release device can occur without having started the emergency procedure.

### Disclosure

The task of the present invention is that of solving the aforementioned problems, devising a safety device for pipes fitting that allows to perform, in case of emergency, the preventive closing of both valves and in sequence the opening of the device for connecting the valves with rapidity and safety.

Within such a task, a further scope of the present invention is that of providing a safety device for pipes fitting able to warrant the tight of the connection in every load conditions indicated by the line specifications.

Another scope of the invention is that of providing a safety device for pipes fitting that allows the use of the control device for opening and closing the valves independently of the fitting device.

A further object of the invention is that of providing a safety device for pipes fitting having a simple conception, a reliable structure, a versatile use as well as relatively economic cost.

A further scope of the invention is that of allowing a simulation of uncoupling of the device without the effective separation of the pipe, in order to be able to test the complete functioning of the system and then to warrant the reliability thereof.

The above mentioned scopes are attained, according to the present invention, by the safety device for pipes fitting according to claim 1.

According to the present invention, the safety device provides for a connection device comprising a plurality of hold members suitable to engage peripherally, in angularly distributed positions, flange means of reciprocal union of the valvular means connected to a first and a second pipe and carried respectively by first and second hold means arranged mobile on a plane substantially transverse to the axis of said valvular means. An elastic tightening member is suitable to link an end of said first and second hold means. At the opposite end of said first and second hold means, operate closing means comprising a clamping member pivoted on said first hold means and suitable to couple up said second hold means, to clamp said connection device in closing position, and an actuator member connected to said clamping member through a leverage articulated to the same first hold means and suitable to move said clamping member between said closing position and an opening position of the clamping device for releasing said valvular means.

### Description of Drawings

Details of the invention shall be more apparent from the detailed description of different embodiments of the safety device for pipes fitting, illustrated for indicative purposes in the attached drawings, wherein:

figure 1 shows a perspective view of the safety device in hand, in a closing configuration;

figure 2 shows a front view of the device in hand, in the same closing configuration;

figure 3 shows an axial section view of the device in hand, in the same closing configuration;

figure 4 shows a section view of the device according to the plane IV - IV of figure 2;

figure 5 shows a section of the device according to the plane V - V of figure 2;

figure 6 shows a perspective view of the safety device in hand, in an opened configuration;

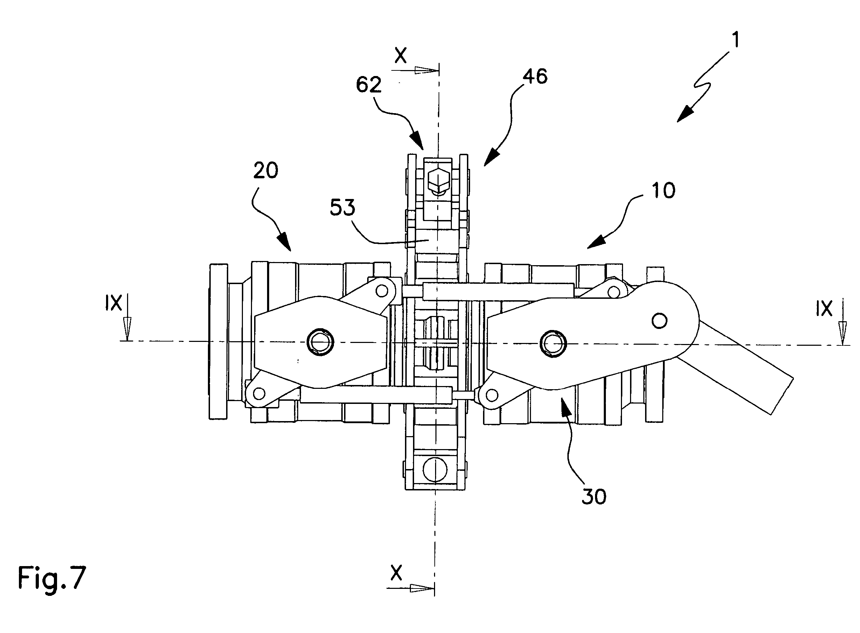

figure 7 shows a front view of the device in hand, in the same opened configuration;

figure 8 shows an axial section view of the device in hand, in the same opened configuration;

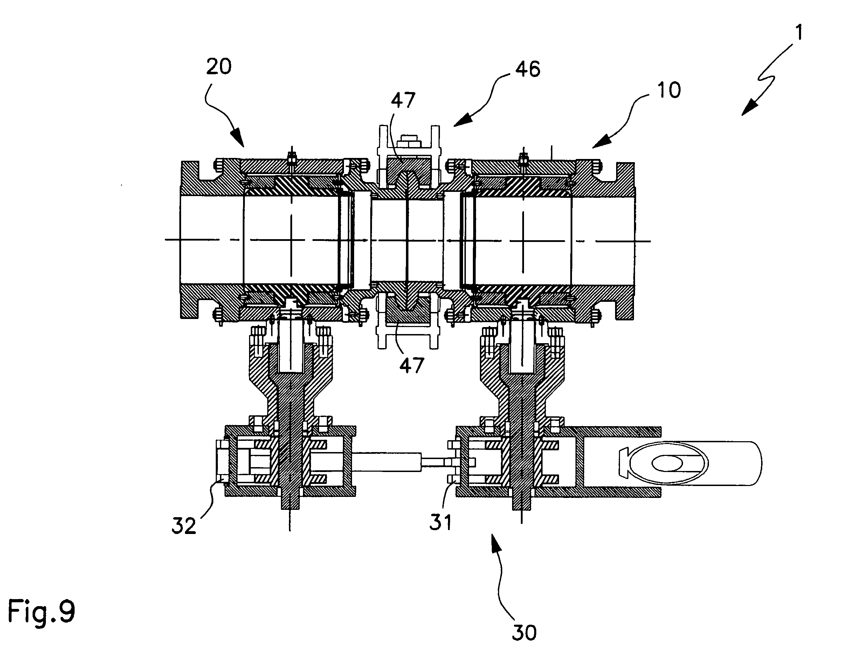

figure 9 shows a section view of the device according to the plane IX - IX of figure 7;

figure 10 shows a section view of the device according to the plane X - X of figure 7;

figures 11, 12 and 13 respectively show a perspective view, a front view and a plan view of a different embodiment of the safety device according to the present invention.

### Best Mode

With particular reference to such figures, the safety device for pipes fitting is indicated in its entirety with 1.

The device 1 comprises first valvular means 10 suitable to be connected to the end of a first pipe and second valvular means 20 suitable to be connected to the end of a second pipe; for simplicity the pipes are not represented. The first and second valvular means 10, 20 respectively have a central portion 11, 21 substantially cylindrical and provided at one end with an external connection portion 12, 22 to a respective pipe, mounted coaxial and having an external diameter adapted to the linkage to the same pipe. The opposite end of each central portion 11, 21 is provided with an internal connection portion 13, 23 coaxial, in practice consisting of flange means having an external diameter smaller than the external diameter of the central portion 11, 21. Practically, the connection of the first valvular means 10 to the second valvular means 20 is realized by matching the flange means 13 of the first valvular means 10 with the flange means 23 of the second valvular means 20.

Preferably the external connection portions 12, 22 each consist of a standard flange and the internal connection portions 13, 23 each consist of a special flange.

Opening and closing of the first and second valvular means 10, 20 are performed by a control device 30 comprising a first and a second control lever 31, 32 mounted fixed respectively on a first and a second transmission shaft 33, 34 so as to perform the opening and the closing respectively of the first and second valvular means 10, 20. Preferably the first and the second transmission shaft 33, 34 protrude radially with respect to the central portion 11, 21 of the first and second valvular means 10, 20.

The position of the first and of the second control lever 31, 32 on the first and on the second transmission shaft 33, 34 is set rotating through a first and a second support frame 35, 36 inserted about the first and the second transmission shaft 33, 34, and connected in a fixed manner to a first and a second support cylinder 37, 38, inserted about the first and the second transmission shaft 33, 34 and connected in a fixed manner to the first and to the second valvular means 10, 20. Therefore the first and the second support frame 35, 36 are fixed with respect to the first and to the second valvular means 10, 20.

The first and the second control lever 31, 32 are connected to each other through a couple of spacer elements 39, preferably constituted by rods provided at one end with an articulated head 40 and at the opposite end with an opened fork 41, so as to warrant an easy separation in a step of moving apart of the first and of the second valvular means 10, 20. The end of the spacer rods 39 provided with an articulated head 40 is connected to the first control lever 31, while the end of the rods 39 provided with a fork 41 is connected to the second control lever 32. It is to be noted that the ends of the rods 39 are suitable to be connected to a respective end of the first and of the second control lever 31, 32, in such a way that the rods 39 result parallel to each other in use.

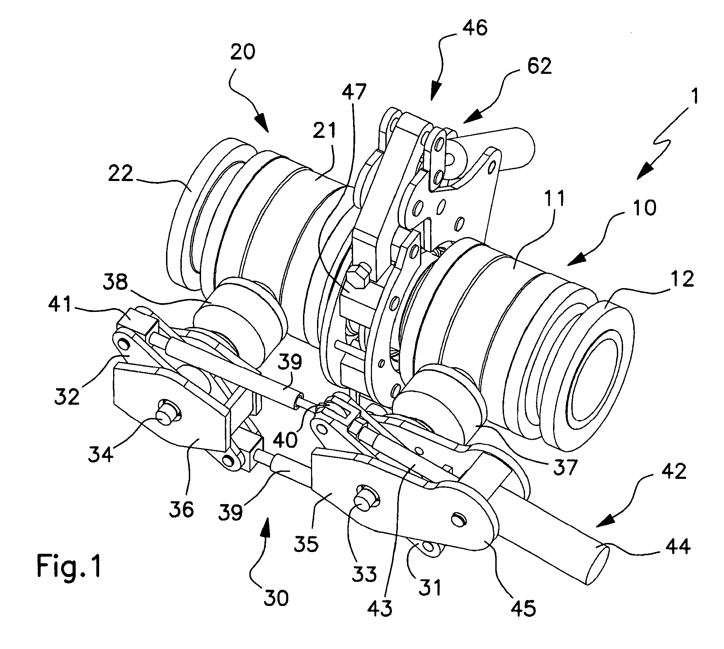

The control device 30 further comprises an actuator 42 preferably of the oil-pressure type. The actuator 42 preferably comprises a piston 43 inserted sliding in a cylinder 44 fixed in a rotating manner to a support portion 45 suitably obtained from the first support frame 35. The free end of the piston 43 is suitable to be connected to an end of the first control lever 31, at the end of a spacer element 39 provided with an articulated head 40 (see figure 1).

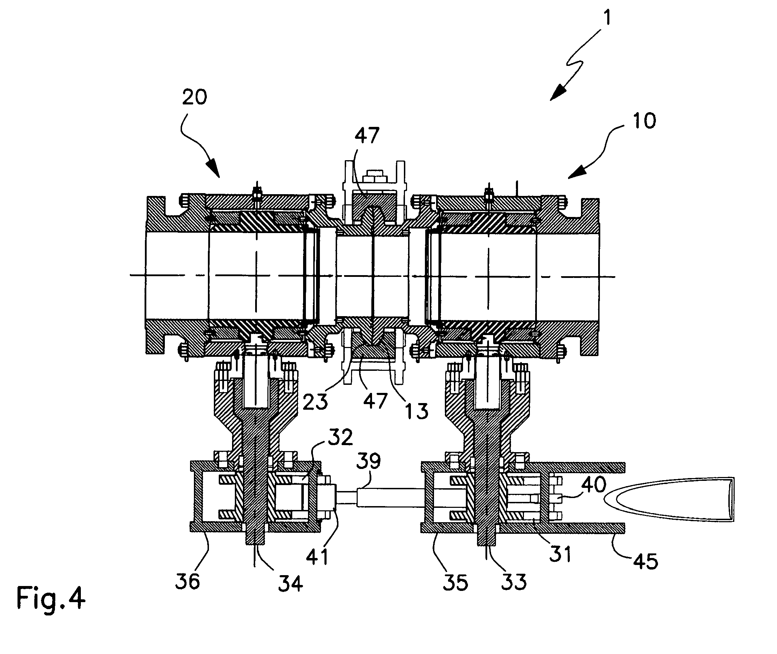

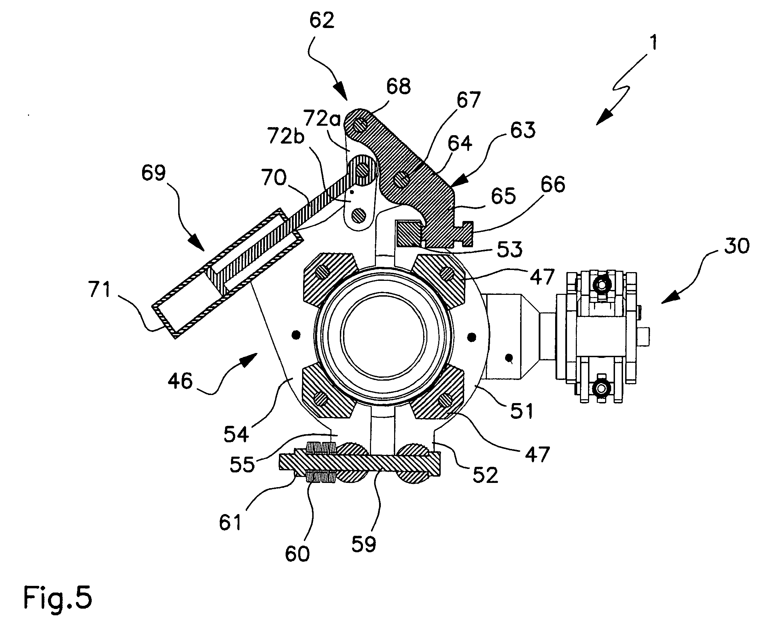

The connection of the first and of the second valvular means 10, 20 to each other is realized by means of a connection device 46 suitable to be inserted about the first and the second internal connection portion 13, 23 of the first and second valvular means 10, 20, set into contact. The connection device 46 comprises a plurality of hold means 47 preferably constituted by balancing jaws suitable to be mounted spanning the flanges 13, 23 (see figures 4 and 5). Preferably four hold members 47 are provided.

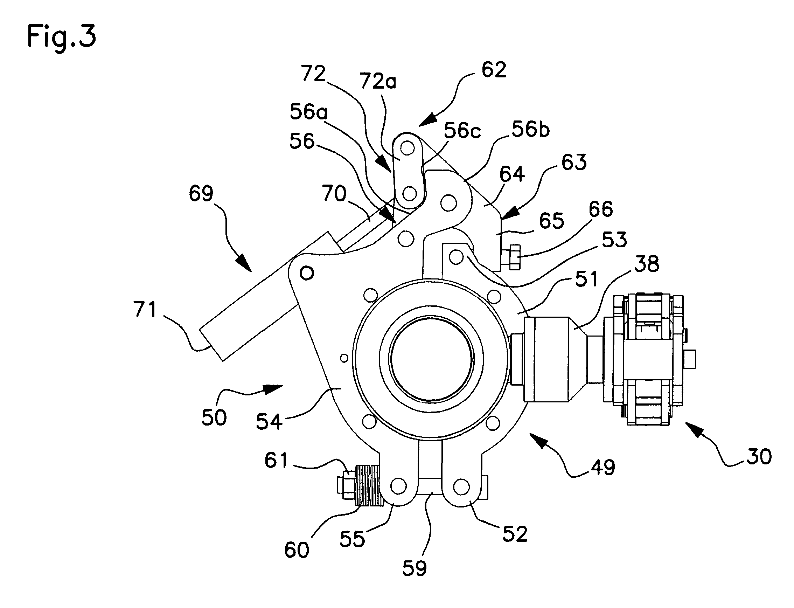

The hold members 47 are connected to each other by means of suitable annular hold means 48, constituted by a first and a second couple of plates 49, 50 having a semicircular shape (figure 3). The semicircular plates 49, 50 are arranged spanning the flanges 13, 23 so as to contain the hold members 47. The first semicircular plate 49 substantially comprises a semi-annular tract 51 provided at one end with a tightening small arm 52 carried rotating, as specified hereafter, and with a closing portion 53 at the other end, substantially consisting of abutment means.

The second semicircular plate 50 substantially comprises a semi-annular tract 54 provided at one end with a tightening small arm 55, carried rotating, and with a closing portion 56 at the other end. Such a closing portion 56 is preferably constituted by a support part 56a, which tangentially protrude from the semi-annular tract 54, and which carries at its extremity an articulation part 56b having a substantially semi-discoid shape and arranged in such a way as to provide an abutment tooth 56c that protrudes from the support part 56a in a substantially radial direction with respect to the semi-annular tract 54 of the second semicircular plate 50. The same second semicircular plate 50 further comprises a clamping arm 57 radially protruding from the semi-annular tract 54 substantially at the zone wherein the support part 56a of the closing portion 56 tangentially protrudes from the semi-annular tract 54.

It is to be noted that the first semicircular plate 49 and the second semicircular plate 50 are suitable to be arranged in such a way that the respective tightening small arms 52, 55 are positioned parallel in front of each other, and that the respective closing portions 53, 56 are positioned in front of each other, in a position substantially symmetric to the position of the tightening small arms 52, 55 with respect to the axis of the first and of the second valvular means 10, 20.

The connection device 46 further comprises an elastic tightening member 58 suitable to link an end of said first and second hold means 49, 50. In particular, the tightening member 58 is arranged at the tightening arms 52, 55 of the semicircular plates 49, 50 so as to realize the linkage of the same semicircular plates 49, 50. The tightening member 58 comprises a rod 59 provided with elastic means 60, for example a spring, suitable to be inserted about the rod 59 and blocked between a tightening small arm 52, 55 and suitable abutment means 61, for example screw means, preferably made integral to the rod 59 at the end. Preferably the tightening member 58 comprises elastic means 60 at one only end of the rod 59, but it is possible to provide the presence of elastic means 60 at both ends of the rod 59.

The connection device 46 further comprises closing means 62 suitable to maintain the connection device 46 in a closed configuration. The closing means 62 comprise a clamping member 63, for example a hook preferably constituted by a base 64 having a lengthened lateral section, provided at one end with an end portion 65 provided with an abutment element 66 suitable to abut the abutment means 53 of the first semicircular plate 49 of the connection device 46, when the same is in closed configuration (figure 5). The base 64 is equipped with a central through hole 67 and with an end through hole 68 at the extremity opposite to the aforesaid end portion 65. The clamping member 63 is suitable to be mounted in a rotating way through the central hole 67 at the semicircular articulation part 56b of the closing portion 56 of the second semicircular plate 50.

Furthermore, the closing means 62 comprise an actuator member 69, preferably oil-pressure, consisting of a piston 70 inserted sliding inside a cylinder 71, and suitable to handle the clamping member 63 between an opening position and a closing position. The cylinder 71 is constrained in a rotating manner to the clamping arm 57 obtained from the semi-annular tract 54 of the connection device 46. The free end of the piston 70 is connected to the clamping member 63 through articulation means 72 consisting of a suitable leverage. The leverage 72 is for example formed by two couples of small connecting rods 72a, 72b arranged symmetric to each other with respect to the contact plane between the internal connection portions 13, 23 of the first and of the second valvular means 10, 20.

In particular, each couple of small connecting rods comprises a first connecting rod 72a suitable to be connected at one part to the end through hole 68 of the base 64 of the clamping member 63, and at the other part to the free end of the piston 70 of the actuator member 69, and to a second small connecting rod 72b suitable to connected at the other part to the second semicircular plate 50 at the support part 56a of the closing portion 56. It is to note that when the clamping member 63 is in closing position, the end of the small connecting rod 72a, linked to the free end of the piston 71, is substantially in contact with the abutment tooth 56c of the closing portion 56 of the second semicircular plate 50, as can be seen in figure 3.

The functioning of the safety device for pipes fitting according to the invention turns out to be easy to understand from the preceding description.

In order to carry out the fitting of the pipes, the flange means 13 of the first valvular means 10 are put in contact with the flange means 23 of the second valvular means 20. In this step one prearranges the control device 30, in particular positioning in a suitable manner the end of the spacer elements 39 provided with a fork 41 at the respective ends of the second control lever 32, so as to link this latter to the first control lever 31.

Then the connection device 46 of the first and of the second valvular means 10, 20 is installed about the flange means 13, 23 in a way as to position the hold means 47 spanning both flanges 13, 23. Afterwards the connection device 46 is closed through the closing means which are handled into the closing position. In this closing configuration, the hold is realized by the hold means 47 that act on the internal connection portions 13, 23 imparting a suitable force. Such a force is obtained by means of a suitable calibration of the elastic tightening member 58 which realizes the linkage between the first and the second semicircular plate 49, 50 at the tightening small arms 52,55.

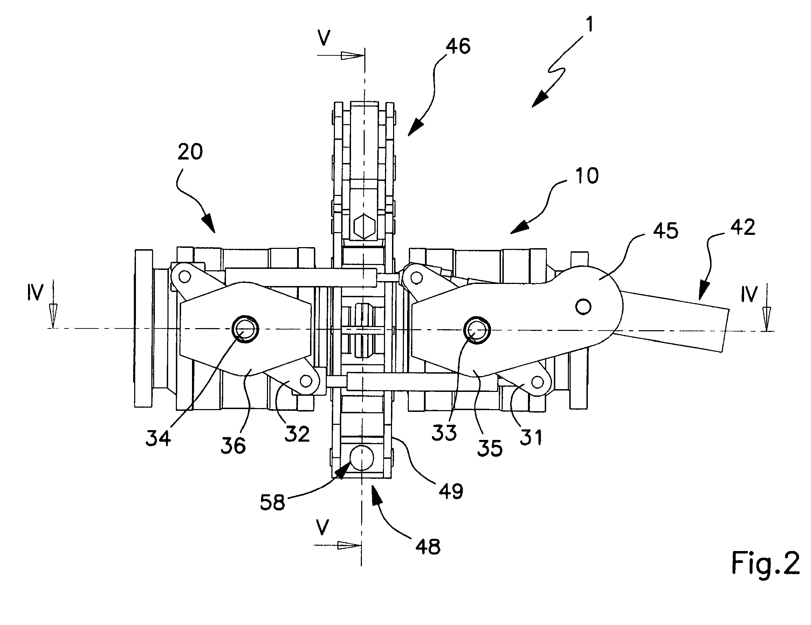

At this point, to enable the transfer of a liquid inside the safety device 1, the connection device 46 is closed and the first and second valvular means 10, 20 are maintained opened (figures 1 - 5). The closing position of the closing means 62 of the connection device 46 is ensured by the position of the articulation means 72 that are substantially in contact against the abutment tooth 56c of the closing portion 56 of the second semicircular plate 50. In particular, in such position, the articulation means have overcome a deadlock wherein the first small connecting rods 72a and the second small connecting rods 72b are aligned, and shape an angle oriented towards the abutment tooth 56c (figures 3 - 5). A raising of the clamping member 63 would imply a closing of the same angle between the first small connecting rods 72a and the second connecting rods 72b and a displacement of the end of these latter towards the same abutment tooth 56c. This movement is impossible for in the closed position the same end of the small connecting rods 72a is substantially in contact with the abutment tooth 56c.

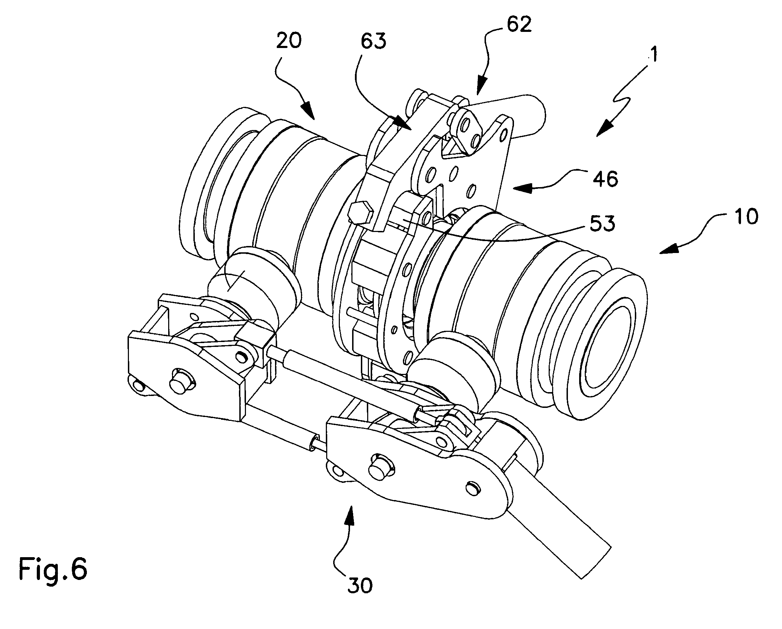

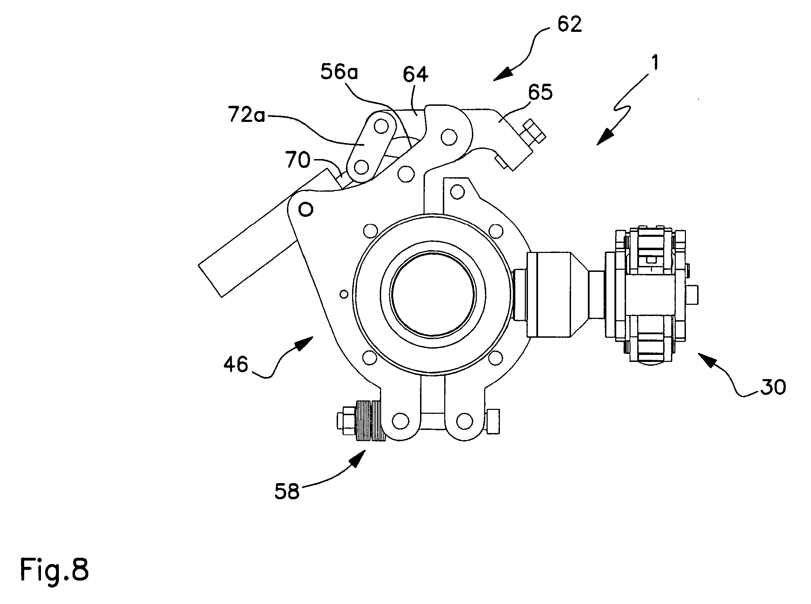

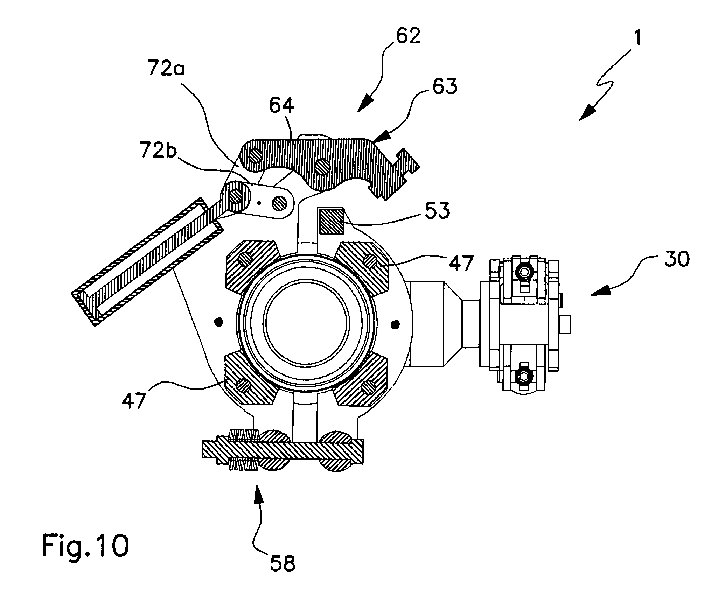

At the moment in which the alarm signal is started the emergency procedure is activated. The actuator 42 handles the first and the second control lever 31, 32 in a way as to close the first and the second valvular means 10, 20. After the total closing of the valvular means 10, 20, the actuator member 69 of the closing means 62 performs the moving of the clamping member 63 in the opening position, drawing on the articulation existing between the first small connecting rod 72a and the second small connecting rod 72b of each couple of small connecting rods 72 (figure 6, 8 and 10). During the opening of the closing means 62, the free end of the piston 70 moves along the arc of circumference described by the second small connecting rods 72b with respect to the support part 56a of the closing portion 56.

It is to note that, at this point, the force exerted by the tightening member 58 on the tightening small arms allows to make the opening of the connection device 46 easier. Such effect turns out to be particularly useful to make the opening faster, or if the safety device gets frozen, for example if it is used in conditions of very low temperatures, or if it is used to transport a cooled gas.

With the complete opening of the connection device 46, the first and second valvular means 10, 20 separate accompanying the respective pipes to which they are constrained, which are then free to move away in security avoiding any dangerous situation.

The safety device in hand therefore attains the scope of performing in a case of emergency the preventive closing of the first and second valvular means 10, 20 and in sequence the opening of the connection device 46 with rapidity and safety. Such a result is obtained in particular thanks to the inventive idea of using a connection device 46 the closing of which is ensured by the articulation means 72 of the closing means 62 which prevent the undesired opening of the clamping member 63. This allows to disconnect the actuator 69 to perform maintenance and/or substitutions of the same without the separation of the valvular means 10, 20.

A characteristic of the method and the device in hand consists of the fact that the use of the tightening member 58 enables to both ensure the hold of the connection of the valvular means 10, 20 and to make the opening of the connection device 46 easier pressing on one end thereof while the other end remains free.

The safety device according to present invention further allows the use of the control device 30 for opening and closing the valvular means 10, 20 independently of the connection device 46 through the presence of two independent oil-pressure actuators 42, 69.

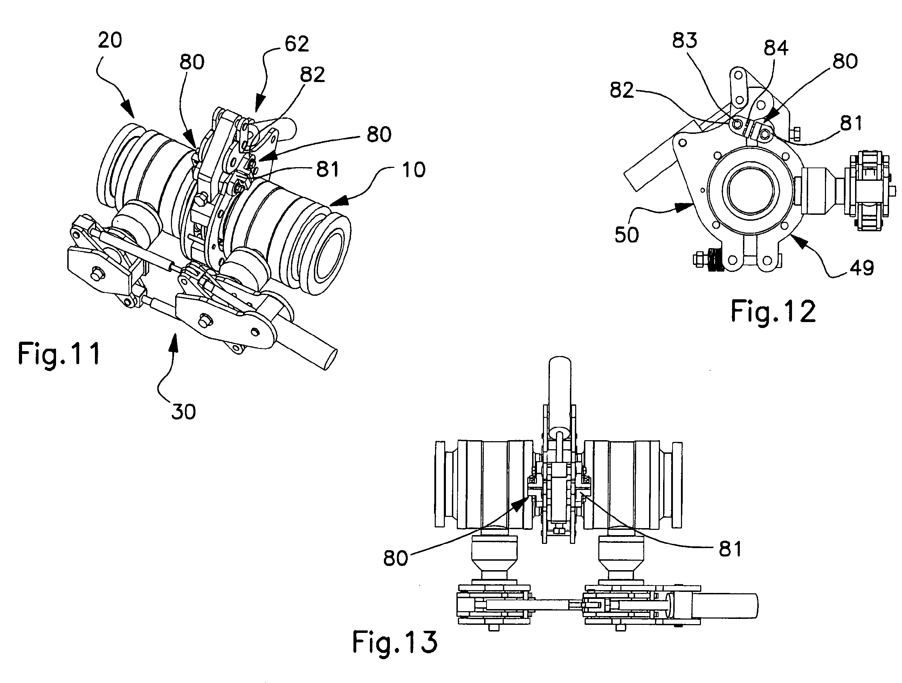

According to a preferred embodiment, visible in figures 11, 12 and 13, the safety device is equipped with an auxiliary closing device 80 which allows to link the semicircular plates 49, 50 and therefore to maintain the connection system always closed. Such an auxiliary closing device 80 substantially consists of couples of angular sectors 81, 82 constrained by means of screw means 83 to the semicircular plates 49, 50, at the free end. The angular sectors 81, 82 are suitable to be reciprocally connected through suitable constraint means 84, for example screw means.

The auxiliary closing device 80 is inserted anytime one intends to carry out a functioning test of the system. In fact, thanks to such auxiliary closing device it is possible to simulate an emergency and so to test the functioning of the system, without having to physically disconnect the pipes to do so.

In practice, the embodiment of the invention, the materials used, as well as the shape and dimensions, may vary depending on the requirements.

Should the technical characteristics mentioned in each claim be followed by reference signs, such reference signs were included strictly with the aim of enhancing the understanding the claims and hence they shall not be deemed restrictive in any manner whatsoever on the scope of each element identified for exemplifying purposes by such reference signs.

## Claims

1. Safety device for pipes fitting, comprising first valvular means (10) suitable to be connected to a first pipe; second valvular means (20) suitable to be connected to a second pipe; a control device (30) suitable to perform the opening and closing of said first and second valvular means (10, 20); a connection device (46) suitable to connect said first valvular means (10) to said second valvular means (20), **characterized in that** said connection device (46) comprises a plurality of hold members (47) suitable to peripherally engage, in angularly distributed positions, flange means (13, 23) of reciprocal union of said valvular means (10, 20) and carried respectively by first and second hold means (49, 50) arranged mobile on a plane substantially transverse to the axis of said valvular means (10, 20); an elastic tightening member (58) suitable to link an end of said first and second hold means (49, 50); closing means (62) acting at the opposite end of said first and second hold means (49, 50) and comprising a clamping member (63) pivoted on said first hold means (49) and suitable to couple up said second hold means (50), in order to clamp said connection device (46) in closing position, and an actuator member (69) connected to said clamping member (63) through a leverage (72) articulated to the same first hold means (49) and suitable to move said clamping member (63) between said closing position and an opening position of the connection device (46) for releasing said valvular means (10, 20).

2. Device according to claim 1, **characterized in that** said hold members (47) are constituted by tilting jaws suitable to be mounted spanning said flange means (13, 23) of reciprocal union of said valvular means (10, 20).

3. Device according to claim 1 or 2, **characterized in that** said first and second hold means (49, 50) comprise semicircular shaped plates (49, 50) suitable to enclose said flange means (13, 23) of reciprocal union of the valvular means (10, 20).

4. Device according to claim 3, **characterized in that** said elastic tightening member (58) comprises a rod (59) which is suitable to engage one end of said semicircular plates (49, 50) and is provided with elastic means (60) suitable to act in compression between at least one of said plates (49, 50) and abutting members (61) constrained to the same rod (59).

5. Device according to claim 3, **characterized in that** said leverage (72) comprises at least a couple of small connecting rods (72a, 72b) suitable to be connected to one end of a piston (70) of said actuator member (69) and at the opposite end respectively to said semicircular plates (49, 50).

6. Device according to claim 5, **characterized in that** in said closing position the said articulation means (72) come into contact against abutting means (56c) shaped by one of said semicircular plates (49, 50).

7. Device according to claim 1, **characterized in that** it comprises an auxiliary closing device (80) which is suitable to stably link said semicircular plates (49, 50) to maintain said connection device (46) in the closing position for carrying out test of the functioning of the system without disconnecting said pipes.

8. Device according to claim 7, **characterized in that** said auxiliary closing device (80) comprises at least a couple of angular sectors (81, 82) constrained to said semicircular plates (49, 50), at the free end of these latter, and suitable to be reciprocally connected through constraint means (84).

## Patentansprüche

1. Sicherheitsvorrichtung zum Verbinden von Rohren, die erste, für den Anschluss an eine erste Leitung geeignete klappenförmige Mittel (10), zweite, für den Anschluss an eine zweite Leitung geeignete klappenförmige Mittel (20); eine Steuervorrichtung (30) zum Öffnen und Schließen der ersten und zweiten klappenförmigen Mittel (10, 20); eine Verbindungsvorrichtung (46) zum Anschluss der ersten klappenförmigen Mittel (10) an die zweiten klappenförmigen Mittel (20), umfasst, **dadurch gekennzeichnet, dass** die Verbindungsvorrichtung (46) eine Vielzahl von Halterungselementen (47) umfasst, die sich in auf der Außenseite winklig um den Rand herum verteilte Flanschmittel (13, 23) einfügen, mit denen die klappenförmigen Mittel (10, 20) miteinander verbunden werden und die jeweils von ersten und zweiten, auf einer im Wesentlichen quer zur Achse der klappenförmigen Mittel (10, 20) ausgerichteten Fläche beweglich angebrachten Halterungsmitteln (49, 50) getragen werden, ein elastisches Befestigungselement (58), das ein Ende der ersten und zweiten Halterungsmittel (49, 50) verbindet, Verschlussmittel (62), die auf Höhe des gegenüberliegenden Endes der ersten und zweiten Halterungsmittel (49, 50) zum Einsatz kommen und ein Sperrelemente (63) umfassen, das drehbar auf den ersten Halterungsmitteln (49) gelagert ist und dazu dient, die zweiten Halterungsmittel (50) einzuhaken, um die Verbindungsvorrichtung (46) in der Schließposition zu arretieren, und ein Betätigungsmittel (69), das über ein Gelenkhebelsystem (72) mit dem Sperrelement (63) verbunden und an die ersten Halterungsmittel (49) gekoppelt ist und dazu dient, das Sperrelement (63) zwischen der Schließposition und einer Öffnungsposition der Verbindungsvorrichtung (46) zu bewegen und damit die klappenförmigen Mittel (10, 20) freizugeben.

2. Vorrichtung gemäß Patentanspruch 1, **dadurch gekennzeichnet, dass** die Halterungselemente (47) aus Schwenkbacken besteht, die zwischen die Flanschmittel (13, 23), mit denen die klappenförmigen Mittel (10, 20) miteinander verbunden werden, montiert werden.

3. Vorrichtung gemäß Patentanspruch 1 oder 2, **dadurch gekennzeichnet, dass** die ersten und zweiten Halterungsmittel (49, 50) halbkreisförmige Platten (49, 50) umfassen, die dazu dienen, die Flanschmittel (13, 23), mit denen die klappenförmigen Mittel (10, 20) miteinander verbunden werden, zu umspannen.

4. Vorrichtung gemäß Patentanspruch 3, **dadurch gekennzeichnet, dass** das elastische Befestigungselement (58) eine Stange (59) umfasst, die ein Ende der halbkreisförmigen Platten (49, 50) einspannt, und über elastische Mittel (60) verfügt, die durch Kompression zwischen mindestens einer der Platten (49, 50) und Anschlagelemente (61), die an der Stange (59) befestigt sind, wirken.

5. Vorrichtung gemäß Patentanspruch 3, **dadurch gekennzeichnet, dass** das Hebelsystem (72) mindestens ein Paar Schubstangen (72a, 72b) umfasst, die an einem Ende des Kolbens (70) des Betätigungselements (69) und am entgegengesetzten Ende jeweils an die halbkreisförmigen Platten (49, 50) angeschlossen ist.

6. Vorrichtung gemäß Patentanspruch 5, **dadurch gekennzeichnet, dass** in der Schließposition die Gelenkelemente (72) mit den Anschlagmitteln (56c), die aus einer der halbkreisförmigen Platten (49, 50) geformt sind, in Berührung kommen.

7. Vorrichtung gemäß Patentanspruch 1, **dadurch gekennzeichnet, dass** sie eine Hilfsschließvorrichtung (80) umfasst, die dazu dient, die halbkreisförmigen Platten (49, 50) dauerhaft zu verbinden, um die Verbindungsvorrichtung (46) in der Schließposition zu halten, so dass der Funktionstest des Systems durchgeführt werden kann, ohne die Leitungen trennen müssen.

8. Vorrichtung gemäß Patentanspruch 7, **dadurch gekennzeichnet, dass** die Hilfsschließvorrichtung (80) mindestens ein Paar Winkelteile (81, 82) umfasst, die auf Höhe des freien Endes der halbkreisförmigen Platten (49, 50) an diesen fixiert sind und miteinander mit Befestigungsmitteln (84) verbunden werden können.

## Revendications

1. Dispositif de sécurité pour la connexion de tuyaux rigides, comprenant des premiers moyens de valve (10) propres à être connectés à un premier tuyau ; des seconds moyens de valves (20) propres à être connectés à un second tuyau; un dispositif de contrôle (30) propre à opérer l'ouverture et la fermeture desdits premier set seconds moyens de valve (10, 20) ; un dispositif de connexion (46) propre à connecter lesdits premiers moyens de valve (10) auxdits seconds moyens de valve (20), **caractérisé en ce que** ledit dispositif de connexion (46) comprend une pluralité d'organes di tenue (47) propres à engager périphériquement, à des positions angulairement distribuées, des moyens à flange (13, 23) d'union réciproque desdits moyens de valve (10, 20) et portés respectivement par des premiers et des seconds moyens de tenue (49, 50) disposés mobiles sur un plan essentiellement transversal à l'axe desdits moyens de valve (10, 20); un organe de serrage élastique (58) propre à relier une extrémité desdits premiers et seconds moyens de tenue (49, 50); des moyens de fermeture (62) agissant au niveau de l'extrémité opposée desdits premiers et seconds moyens de tenue (49, 50) et comprenant un organe de blocage (63) fixé pivotant sur lesdits premiers moyens de tenue (49) et propre à accrocher lesdits seconds moyens de tenue (50), pour bloquer ledit dispositif de connexion (46) en position de fermeture, et un organe actionneur (69) connecté audit organe de blocage (63) au moyen d'un levier (72) articulé aux mêmes premiers moyens de tenue (49) et propre à mettre en mouvement ledit organe de blocage (63) entre ladite position de fermeture et une position d'ouverture dudit dispositif de connexion (46) pour le décrochage desdits moyens de valve (10, 20).

2. Dispositif selon la revendication 1, **caractérisé en ce que** lesdits organes de tenue (47) sont constitués de mâchoires basculantes propres à être montées à cheval sur lesdits moyens à flange (13, 23) d'union réciproque desdits moyens de valve (10, 20).

3. Dispositif selon la revendication 1 ou 2, **caractérisé en ce que** lesdits premier set seconds moyens de tenue (49, 50) comprennent des plaques (49, 50) de forme semi-circulaire et propres à entourer lesdits moyens à flange (13, 23) d'union réciproque des moyens de valve (10, 20).

4. Dispositif selon la revendication 3, **caractérisé en ce que** ledit organe de serrage élastique (58) comprend une tige (59) qui est propre à engager une extrémité desdites plaques semi-circulaires (49, 50) et est pourvue de moyens élastiques (60) propres à agir en compression entre au moins une desdites plaques (49, 50) et des organes de butée (61) contraints à la même tige (59).

5. Dispositif selon la revendication 3, **caractérisé en ce que** ledit levier (72) comprend au moins une paire de biellettes (72a, 72b) propres à être connectée à une extrémité à un piston (70) dudit organe actionneur (69) et à l'extrémité opposée respectivement auxdites plaques semi-circulaires (49, 50).

6. Dispositif selon la revendication 5, **caractérisé en ce que** dans ladite position de fermeture lesdits moyens d'articulation (72) viennent en contact contre des moyens de butée (56c) formés par une desdites plaques semi-circulaires (49, 50).

7. Dispositif selon la revendication 1, **caractérisé en ce qu'**il comprend un dispositif de fermeture auxiliaire (80) qui est propre à relier de manière stable lesdites plaques semi-circulaires (49, 50) pour maintenir ledit dispositif de connexion (46) dans la position de fermeture pour l'exécution de tests de fonctionnement du système sans déconnecter lesdits tuyaux.

8. Dispositif selon la revendication 7, **caractérisé en ce que** ledit dispositif de fermeture auxiliaire (80) comprend au moins une paire de secteurs angulaires (81, 82) contraints auxdites plaques semi-circulaires (49, 50), au niveau de l'extrémité libre de celles-ci, et propres à être réciproquement connectés à travers des moyens de contrainte (84).
